Europäisches Patentamt

European Patent Office

Office européen des brevets

(11) Veröffentlichungsnummer: **0 325 945**
**A2**

## (12) EUROPÄISCHE PATENTANMELDUNG

(21) Anmeldenummer: **89100397.2**

(22) Anmeldetag: **11.01.89**

(51) Int. Cl.⁴: **H04N 9/64**

(30) Priorität: **28.01.88 DE 3802430**

(43) Veröffentlichungstag der Anmeldung:
**02.08.89 Patentblatt 89/31**

(84) Benannte Vertragsstaaten:
**DE GB**

(71) Anmelder: **Blaupunkt-Werke GmbH**
**Robert-Bosch-Strasse 200**
**D-3200 Hildesheim(DE)**

(72) Erfinder: **Hinkel, Lukas**
**Meerbrink 12**
**D-3204 Nordstemmen(DE)**

(74) Vertreter: **Eilers, Norbert, Dipl.-Phys.**
**Robert-Bosch-Strasse 200**
**D-3200 Hildesheim(DE)**

(54) **Videoverstärkerschaltung.**

(57) Bei einer Videoverstärkerschaltung zur Ansteuerung einer Farbbildröhre, wobei jeweils für ein Farbwertsignal (R, G, B) ein erster Videoverstärker mit einer Arbeitspunktregelschaltung, eine Endstufe und eine Einrichtung zur Messung des jeweiligen Strahlstroms vorgesehen sind, ist jeweils für ein Farbwertsignal ein zweiter Videoverstärker mit einer Sperrpunktregelschaltung vorgesehen, deren Eingang mit der Einrichtung zur Messung des jeweiligen Strahlstroms verbunden ist. Die Ausgangssignale der Endstufen sind Eingängen der Arbeitspunktregelschaltungen und über je eine Schwarzsteuerschaltung und je einen Impedanzwandler der Farbbildröhre zuführbar. Ausgangsspannungen der Sperrpunktregelschaltungen bilden Bezugspotentiale der Schwarzsteuerschaltungen, und Ausgänge der zweiten Videoverstärker sind mit Steuereingängen zur Steuerung des Arbeitspunktes der ersten Videoverstärker verbunden.

EP 0 325 945 A2

## Videoverstärkerschaltung

Die Erfindung geht aus von einer Videoverstärkerschaltung nach der Gattung des Hauptanspruchs.

Für Farbfernsehgeräte sind Videoverstärkerschaltungen bekannt, bei denen zur Regelung des Arbeitspunktes der Videoendstufen eine sogenannte Sperrpunktregelung (auch Cut-off-Automatik genannt) vorgesehen ist. Dabei wird eine dem Strahlstrom entsprechende Spannung während einer Zeile innerhalb des vertikalfrequenten Austastintervalls nach dem Strahlrücklauf mit einer Vergleichsspannung verglichen und das Ergebnis des Vergleichs während des darauffolgenden Halbbildes gespeichert. In Abhängigkeit von der gespeicherten Spannung erfolgt dann eine Einstellung des Arbeitspunktes der Videoendstufe.

Es sind integrierte Schaltungen erhältlich, bei denen jeweils drei Videoverstärker für die drei Farbwertsignale R, G und B sowie die entsprechenden Sperrpunktregelschaltungen zusammengefaßt sind.

Diese integrierten Schaltungen sind nach verschiedenen Gesichtspunkten optimiert. So wird beispielsweise eine integrierte Schaltung unter der Bezeichnung LM 1203 der Firma National Semiconductor angeboten, die zwar über eine große Bandbreite und sehr gute Gleichlaufeigenschaften zwischen den Kanälen verfügt; jedoch bei der Sperrpunktregelung den Nachteil aufweist, bei einer Helligkeitseinstellung eine Farbtonänderung zu verursachen.

Die erfindungsgemäße Videoverstärkerschaltung mit den kennzeichnenden Merkmalen des Hauptanspruchs hat demgegenüber den Vorteil, daß sie außer sehr guten Gleichlaufeigenschaften und einer hohen Bandbreite eine gute Sperrpunktregelung aufweist. Zusätzlich wird dabei eine Arbeitspunktstabilisierung der Endstufe erzielt.

Als weiterer Vorteil ist anzusehen, daß die erfindungsgemäße Videoverstärkerschaltung kostengünstig hergestellt werden kann.

Durch die in den Unteransprüchen aufgeführten Maßnahmen sind vorteilhafte Weiterbildungen und Verbesserungen der im Hauptanspruch angegebenen Erfindung möglich.

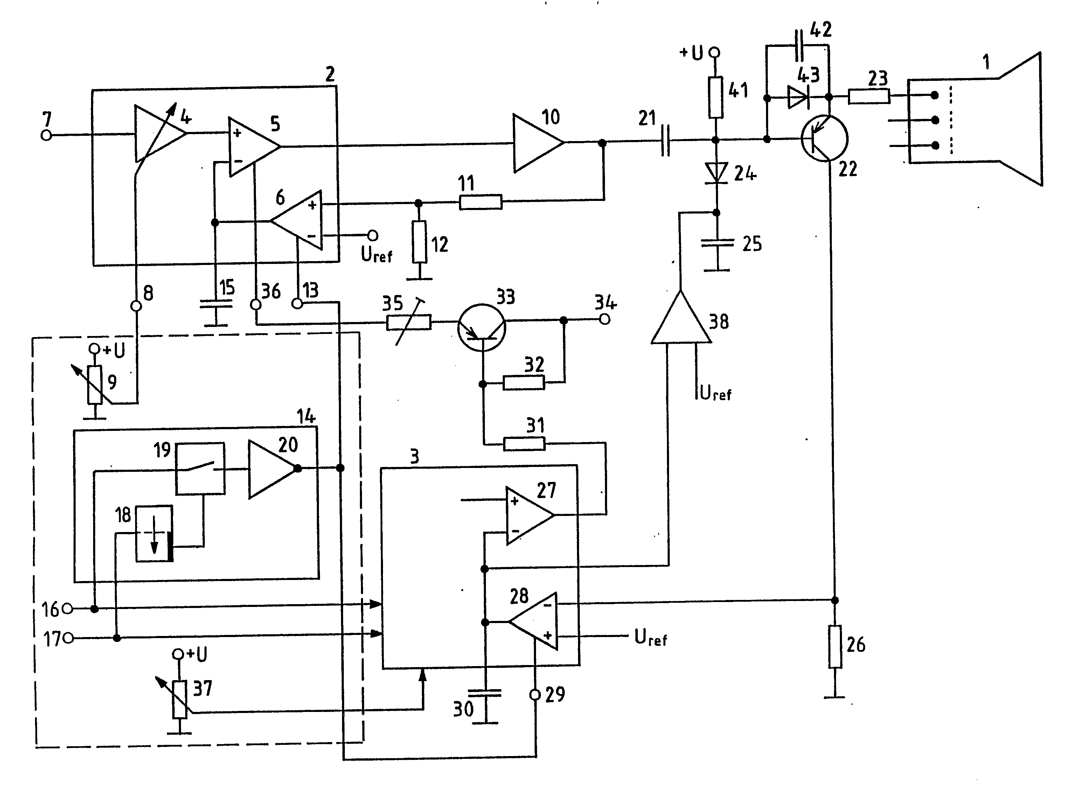

Ein Ausführungsbeispiel der Erfindung ist in der Zeichnung dargestellt und in der nachfolgenden Beschreibung näher erläutert.

Der Übersichtlichkeit halber ist in der Zeichnung lediglich ein Kanal, nämlich der Kanal für das Farbwertsignal R, dargestellt. Außer der Farbbildröhre 1 und den gestrichelt umrandeten Teilen sind die in der Zeichnung dargestellten Bauteile und Baugruppen jeweils noch einmal für den Grün-Kanal und noch einmal für den Blau-Kanal vorhanden. Einige Baugruppen sind für jeweils alle drei Kanäle in zwei integrierten Schaltungen 2, 3 zusammengefaßt. Die integrierte Schaltung 2 ist vorzugsweise vom Typ LM 1203 der Firma National Semiconductors und enthält im wesentlichen drei Videoverstärker. Jeweils einer der Videoverstärker umfaßt neben anderen für das Verständnis der Erfindung nicht erforderlichen Teilen einen steuerbaren Verstärker 4, einen Differenzverstärker 5 und einen schaltbaren Verstärker 6. Letzterer ist an sich für eine Sperrpunktregelung vorgesehen.

Dem Eingang 7 des steuerbaren Verstärkers 4 wird das Farbwertsignal R zugeführt, dessen Verstärkung mit Hilfe einer bei 8 zugeführten Spannung einstellbar ist. Diese wird mit Hilfe eines Potentiometers 9 aus einer konstanten Spannung + U gewonnen und ermöglicht die Einstellung des Kontrasts mit Hilfe eines einzigen Potentiometers für die drei Farbwertsignale. Der Ausgang des Differenzverstärkers 5 ist mit dem Eingang einer Endstufe 10 verbunden, welche das Videosignal auf eine zur Ansteuerung der Farbbildröhre 1 erforderliche Amplitude bringt.

Mit Hilfe eines Spannungsteilers 11, 12 wird ein Teil der Ausgangsspannung der Endstufe 10 auf den nichtinvertierenden Eingang des schaltbaren Verstärkers 6 gegeben, dessen invertierender Eingang mit einer Referenzspannung Uref beaufschlagt ist. Der Ausgang des schaltbaren Verstärkers 6 gibt nur ein Signal ab, wenn an einem Schalteingang 13 ein entsprechendes Signal ansteht. Während der übrigen Zeit ist der Ausgang des schaltbaren Verstärkers 6 hoch ohmig. Mit Hilfe des Impulsformers 14 wird ein Impuls abgeleitet, der - wie im Zusammenhang mit Sperrpunktregelschaltungen bereits bekannt - während eines zeilenfrequenten Hinlaufs nach der vertikalfrequenten Strahlaustastung auftritt. Während dieser Zeit ist der aus dem Differenzverstärker 5, der Endstufe 10 und dem schaltbaren Verstärker 6 gebildete Regelkreis geschlossen, was zu einer Arbeitspunktstabilisierung führt. Dabei wird ein Kondensator 15 auf einen entsprechenden Spannungswert aufgeladen, der sich bis zum nächsten Impuls praktisch nicht verändert.

Dem Impulsformer 14 werden über Eingänge 16, 17 ein horizontalfrequenter und ein vertikalfrequenter Impuls H, V zugeführt. Mit Hilfe eines monostabilen Multivibrators 18, einer Torschaltung 19 und einer Invertierstufe 20 wird aus den Impulsen H und V der dem Schalteingang 13 zugeführte Impuls gewonnen.

Das Ausgangssignal der Endstufe 10 wird über einen Koppelkondensator 21 der Basis eines Transistors 22 zugeführt, der als Impedanzwandler betrieben wird und das Videosignal über einen Widerstand 23 an die betreffende Kathode der Farbbildröhre weiterleitet. Eine Diode 43 und ein Kondensator 42 sind der Basis-Emitter-Strecke des Transistors 22 parallelgeschaltet. Dabei dient der Kondensator 42 zur Unterdrükkung von Spannungsspitzen am Widerstand 26 bei hochfrequenten Videosignalen, während die Diode 43 die Basis-Emitter-Strecke des Transistors 22 schützt und eine Übertragung von positiven Transienten zur Kathode der Bildröhre ermöglicht.

Der Kondensator 21 bildet zusammen mit der Diode 24 eine Schwarzsteuerschaltung, bei welcher in an sich bekannter Weise der Gleichspannungsanteil des Signals sich derart einstellt, daß der positive Spitzenwert des Signals der Spannung am Kondensator 25 entspricht. Da das Signal ausgetastet ist, wird somit der Austastwert auf die Spannung am Kondensator gebracht. Über einen Widerstand 41 ist die Schwarzsteuerschaltung mit positivem Potential verbunden.

Der Kollektorstrom des Transistors 22 verursacht am Widerstand 26 einen Spannungsabfall, der dem Strahlstrom proportional ist.

Der integrierte Schaltkreis 3 stellt einen Videoprozessor dar und ist unter der Typenbezeichnung TDA 3301 B erhältlich. Der integrierte Schaltkreis 3 enthält eine Fülle von Schaltungen zur Verarbeitung von Videosignalen, von denen lediglich ein Verstärker 27 und ein schaltbarer Verstärker 28 dargestellt sind, da sie zur Erläuterung der Erfindung wesentlich sind. Der schaltbare Verstärker 28 ist in ähnlicher Weise wie der schaltbare Verstärker 6 zur Durchführung einer Sperrpunktregelung vorgesehen und wird bei dem integrierten Schaltkreis 3 auch dazu benutzt. Einem Schalteingang 29 wird der Ausgangsimpuls des Impulsformers 14 zugeführt. Der Strahlstrom wird also während einer Zeit, die während eines zeilenfrequenten Hinlaufs nach der vertikalfrequenten Strahlaustastung liegt, gemessen und mit einem konstanten Wert, der durch eine Referenzspannung Uref dargestellt wird, verglichen.

Das Ergebnis dieses Vergleichs wird in einem Kondensator 30 während des folgenden Bildes gespeichert und dem invertierenden Eingang des Verstärkers 27 zugeführt. Der Ausgang des Verstärkers 27 ist über einen Spannungsteiler 31, 32 mit der Basis eines Transistors 33 verbunden, dessen Kollektor über einen Anschluß 34 negative Betriebsspannung (-12 V) erhält. Der Emitter des Transistors 33 ist über einen einstellbaren Widerstand 35 mit einem Steuereingang 36 des Differenzverstärkers 5 im integrierten Schaltkreis 2 verbunden. Der Eingang 36 ist innerhalb des Differenzverstärkers 5 mit dem Emitter eines Transistors verbunden, der in Bezug auf das zu verstärkende Videosignal in Emittergrundschaltung geschaltet ist. Der Widerstand 35 wirkt dementsprechend als Gegenkopplungswiderstand, so daß mit Hilfe des einstellbaren Widerstandes 35 die Verstärkung des Differenzverstärkers 5 einstellbar ist. Dadurch kann ein Abgleich der Differenzverstärker 5 der einzelnen Kanäle aneinander durchgeführt werden, wozu lediglich in zwei der Kanälen der Widerstand 35 einstellbar ausgeführt zu sein braucht.

Die Ausgangsspannung des Verstärkers 27 wird über den Transistor 33 und den einstellbaren Widerstand 35 dem Videosignal überlagert, so daß eine Änderung der Helligkeit damit möglich ist. Hierzu wird dem integrierten Schaltkreis 3 eine mit Hilfe des Potentiometers 37 einstellbare Spannung zugeführt.

Die Ausgangsspannung des schaltbaren Verstärkers 28 wird ferner einem weiteren Verstärker 38 zugeführt und mit einer weiteren Referenzspannung Uref verglichen. Die Differenz beider Spannungen wird vom Ausgang des Verstärkers 38 der Schwarzsteuerschaltung als Bezugspotential zugeführt.

## Ansprüche

1. Videoverstärkerschaltung zur Ansteuerung einer Farbbildröhre, wobei jeweils für ein Farbwertsignal (R, G, B) ein erster Videoverstärker mit einer Arbeitspunktregelschaltung, eine Endstufe und eine Einrichtung zur Messung des jeweiligen Strahlstroms vorgesehen sind, dadurch gekennzeichnet, daß jeweils für ein Farbwertsignal ein zweiter Videoverstärker (27) mit einer Sperrpunktregelschaltung (28) vorgesehen ist, deren Eingang mit der Einrichtung (26) zur Messung des jeweiligen Strahlstroms verbunden ist,

daß die Ausgangssignale der Endstufen (10) Eingängen der Arbeitspunktregelschaltungen (6) und über je eine Schwarzsteuerschaltung (21, 24, 25) und je einen Impedanzwandler (22) der Farbbildröhre (1) zuführbar sind,

daß Ausgangsspannungen der Sperrpunktregelschaltungen (28) Bezugspotentiale der Schwarzsteuerschaltungen (21, 24, 25) bilden und

daß Ausgänge der zweiten Videoverstärker (27) mit Steuereingängen (36) zur Steuerung des Arbeitspunktes der ersten Videoverstärker (5) verbunden sind.

2. Videoverstärkerschaltung nach Anspruch 1, dadurch gekennzeichnet,

daß die ersten Videoverstärker (5) und die Arbeitspunktregelschaltungen (6) in einem ersten integrierten Schaltkreis (2) zusammengefaßt sind.

3. Videoverstärkerschaltung nach Anspruch 2, dadurch gekennzeichnet, daß die zweiten Videoverstärker (27) und die Sperrpunktregelschaltungen (28) in einem zweiten integrierten Schaltkreis (3) zusammengefaßt sind.

4. Videoverstärkerschaltung nach Anspruch 1, dadurch gekennzeichnet, daß die Schwarzsteuerschaltungen aus je einem in den Weg der Videosignale geschalteten ersten Kondensator (21) und einer Reihenschaltung aus einer Diode (24) und einem zweiten Kondensator (25), welche den Weg der Videosignale mit Massepotential verbindet, bestehen und daß der zweite Kondensator (25) auf eine Spannung aufladbar ist, welche von der Ausgangsspannung der jeweiligen Sperrpunktregelschaltung (28) abgeleitet ist.

5. Videoverstärkerschaltung nach Anspruch 4, dadurch gekennzeichnet, daß zwischen den Ausgängen der Sperrpunktregelschaltungen (28) und den zweiten Kondensatoren (25) je ein Verstärker (38) mit hohem Eingangswiderstand angeordnet ist und daß die Ausgänge der Sperrpunktregelschaltungen (28) über je einen Kondensator (30) mit festem Potential verbunden sind.

6. Videoverstärkerschaltung nach Anspruch 1, dadurch gekennzeichnet, daß die Ausgänge der zweiten Videoverstärker (27) über je einen als Impedanzwandler geschalteten Transistor (33) und je einen Widerstand (35) mit den Steuereingängen (36) der ersten Videoverstärker (5) verbunden sind.

7. Videoverstärkerschaltung nach Anspruch 6, dadurch gekennzeichnet, daß für mindestens zwei der drei Farbwertsignale der Widerstand (35) einstellbar ist.